# EUROPEAN PATENT SPECIFICATION

(11) **EP 4 093 212 B1**
(45) Date of publication and mention of the grant of the patent: **28.02.2024**
(21) Application number: 21701370.5
(22) Date of filing: 21.01.2021
(51) Int. Cl.: A23F 3/16, A23F 3/32, A23F 5/38, A23L 2/395, A23L 33/105

(54) **BEVERAGE COMPOSITION**
GETRÄNKEZUSAMMENSETZUNG
COMPOSITION DE BOISSON

(30) Priority: 24.01.2020 GB 202001077
(43) Date of publication of application: 30.11.2022
(73) Proprietor: MOXCHA LTD, Ickenham, Middlesex UB10 8DQ (GB)
(72) Inventor: THUNDIL, Jacob, Ickenham, Middlesex UB10 8 DQ (GB)
(74) Representative: Hesketh, Alan
(86) International application number: PCT/IB2021/050443
(87) International publication number: WO 2021/148970

(56) References cited:
- WO-A1-2008/113778
- CN-A- 108 850 321
- US-A- 2 380 092
- US-A- 4 594 258
- US-A1- 2012 052 158
- US-A1- 2018 344 635

## Description

This invention relates to a beverage composition and in particular to a solid beverage tablet composition that dissolves or disperses rapidly in hot water or milk to produce an edible drink.

Beverage products, such as tea, coffee, fruit and herbal products are often sold in the form of single portions, such as tea bags, coffee bags or other infusible bag preparations.

Such preparations require considerable packaging and are bulky to both store and transport. This not only adds to the cost of the product, but also transport is a large source of carbon emissions. In addition, many infusible bags contain plastics materials, such as PVC or polypropylene, which may be harmful to the consumer and to the environment. Also, in preparing tea bags, whole leaves are chopped or ground, resulting in interaction with air and moisture, and loss of nutrients, aroma, herbal oils and flavour.

Further disadvantages of infusion bags include the fact that the dried herbs further degrade during drying processes and storage, again because of loss of beneficial volatile compounds. Then, the infusion process in hot water, prior to consumption, does not capture all the nutritious compounds, so is wasteful.

Attempts have been made in the past to overcome the disadvantages of infusion bags by producing single portion beverage compositions. A satisfactory such product must have sufficient hardness to withstand packaging and storage, but be able to disintegrate readily in hot water or hot milk. The practical challenge in achieving that result is to be able to form a free-flowing powder that can be compressed to produce a satisfactory solid composition, without using binders and other artificial excipients, such as magnesium stearate, or microcrystalline cellulose, which can affect the flavour and aroma of the beverage and negate the health benefits.

It has now been found that control of the compression force of a powdered extract of an edible material can provide a solid composition with the desired disintegration properties, by using an edible oil as a binder.

Soluble solid beverage compositions have been made from compressed extracts by other processes. For example, US 2003/044505 describes a process for producing tea tablets by pressing freeze-dried tea powder in a tablet pressing machine. However, the tea powder described is mixed with dispersion agents, such as sodium bicarbonate and tartaric acid, and adhesion agents such as starch or lactose. There is no disclosure of the use of an edible oil as a binder.

US patent 4,384,005 describes a process for preparing a non-friable, rapidly water-soluble tablet, comprising an edible acidulent, formed by compression. A flowable composition is compressed using tableting pressures below 200 psig to produce a tablet with density of about 0.7 to 1.0 grams per cubic centimetre. However, to achieve this result, other excipients are incorporated, including an aqueous moistener comprising corn syrup and a hydrolyzed starch material to function as a melting point elevator. There is no disclosure of the use of an edible oil as a binder.

EP 0229920 describes a coffee tablet using moisture as an aid to compression. Roast and ground coffee particles having a moisture content of at least 3% by weight are formed into tablets by compaction, without extraneous binders, using a pressure from 20.7 MPa to 48.3MPa. The mean particle size of the particles is from 0.4 mm to 2.0 mm. There is no disclosure of the use of an edible oil as a binder. Indeed, it is stated that the presence of coffee oils may result in chemical instability during storage.

WO 02/062152 describes a tablet based on a carbohydrate matrix in which the desired porosity is achieved by treatment with a gas so that gas is entrapped in the tablet. Compression of a powder uses relatively low compaction pressures, of about 20 kPa. Binding agents described are carbohydrates, starches in native or treated form; lipids, waxes and fats. Because an essential element of a tablet is a carbohydrate matrix, there is clearly no disclosure of an edible oil as the sole binder.

CN 108850321 describes an instant tea powder rich in GABA. However, the disclosure is brief and incomplete. Although an edible oil is mentioned, and compression in a tablet press, there is no disclosure of an edible oil being the sole binder, nor of a low compression force. It is also not clear that the powder is readily soluble or dispersible.

In summary, the prior art documents above describe the preparation of beverage tablets by a variety of methods, which include compression of powders under low compression force. However, none of the documents suggest that control of the compression force in conjunction with the use of an edible oil as the sole binder can provide a solid beverage composition with improved properties.

Accordingly, the present invention provides a solid beverage tablet composition
which is readily soluble or dispersible in hot water or milk to produce a beverage, the solid beverage composition comprising a compressed powdered extract of an edible material, wherein the sole binder in the composition is an edible oil.

The beverage employed in the solid composition of this invention may be any suitable drink prepared using hot water or hot milk. Suitable beverages include coffee, teas and herbal teas. True teas, prepared from the cured leaves of the tea plant, *Camellia sinensis,* include black tea, green tea, white tea, yellow tea, matcha tea, and oolong tea. Teas also include flavoured and perfumed teas. Herbal teas are prepared from a herb, fruit, or spice, including from flowers, fruit, leaves, seeds or roots. Suitable herbal teas include those made from apple, barley, coconut, chamomile, cinnamon, dill, dandelion, echinacea, elderberry, fennel, ginger, galangal, ginseng, hawthorn, lemon, liquorice, mint, nettle, oat flower, olive leaf, orange, poppy, rose hip, rooibos (Aspalathus linearis) rosemary, sage, St. John's wort, thyme, tulsi, turmeric, valerian, yerba mate (Ilex paraguariensis).

Preferred herbal teas are cinnamon, fennel, ginger, lemon, mint, turmeric, and tulsi.

The beverage tea may include mixtures of herbal teas, such as: ginger and lemon; or ginger and turmeric; or ginger and tulsi; or turmeric and tulsi; or peppermint and spearmint; or ginger and galangal; or oat flower and valerian.

The sole binder in the solid beverage tablet composition of this invention is an edible oil. The term 'sole binder' means that the composition is substantially free from any other binding material. However, the composition may comprise a mixture of two or more edible oils, within the meaning of sole binder. The composition is also substantially free from other excipients.

Preferably, the edible oil for use in this invention is an edible herbal oil. An edible herbal oil is a volatile or non-volatile liquid derived from a natural source, in particular from a plant source. As used herein, the term herbal oil incudes essential oils and oleoresins.

Other edible oils include vitamin oils, such as vitamin D oil, and fish oils, such as omega 3 oil.

An essential oil is a volatile oil derived from a natural source.

An oleoresin is a semi-solid extract of plant material composed of a resin in solution in an essential and/or fatty oil, obtained by evaporation of the solvent used in its extraction. Typical solvents used for production of oleoresins include hydrocarbons, chlorinated hydrocarbons, alcohols, ethers, ketones and carbon dioxide.

Suitable herbal oils are any that are recognized as safe, such as those listed in the US Code of Federal Regulations 21CFR182.20; and include basil oil, bay oil, black pepper oil, caraway seed oil, cardamom seed oil, chamomile oil, cinnamon oil, coconut oil, clove oil, coffee oil, dill oil, fennel seed oil, garlic oil, ginger oil, grapefruit oil, lemon oil, lemongrass oil, mustard oil, nutmeg oil, orange oil, palm oil, peppermint oil, rosehip oil, sage oil, tea tree oil, thyme oil, turmeric oil, vitamin D oil, omega 3 oil.

These herbs can also be used to prepare oleoresins and essential oils.

Preferred edible oils are ginger oil, cinnamon oil, coconut oil, lemon oil, turmeric oil, vitamin D oil and omega 3 oil.

The extracts of some herbs, such as cinnamon, produce a powder that does not have good binding properties. In those cases, the corresponding oil may be employed, such as cinnamon oil.

Preferably, the edible oil used as a binder in the composition of this invention is derived from the same plant as the beverage ingredient. Alternatively, a different herb may be used as the source of the binder. For example, a beverage of tulsi and ginger may use ginger extract power and tulsi extract powder. In that case, a ginger with a naturally high oil content is used as the binder. Similarly, in a beverage of turmeric and tulsi tea, the turmeric is both the beverage and the herbal oil binder.

The solid beverage tablet composition of this invention may be in any suitable 3-dimensional shape, for example, a cube, disc, rectangular prism, cylinder, sphere, pyramid. Alternatively, the composition may be in a form representing an object, such as a leaf or a flower. Any of these shapes may be referred to as a tablet. As used herein, the term tablet also includes pellets and balls.

The composition of this invention is prepared by a process which comprises extracting an edible material into a food grade solvent, removing insoluble residues, drying the solution to produce a powdered extract of the edible material, and compressing the powdered extract in the presence of a herbal oil, under conditions to produce a solid composition that is readily soluble or dispersible in hot water or milk to produce a beverage.

The edible material which is extracted may be the herb or fruit in its natural state, which may be ground with the solvent.

The food grade solvent is suitably water or carbon dioxide, preferably distilled, reverse osmosis treated, or deionized water. No excipients are introduced during the extraction process. Insoluble residues are then removed, for example by filtration. Thus, the extracts contain negligible insoluble plant cellulose that may hinder dissolution or dispersion of the tablets of this invention in hot water.

The solvent is then removed from the extract to produce a powdered extract of the edible substance. When the solvent is water, the water is preferably removed by freeze drying or spray drying using conventional techniques.

At this stage, in an optional feature of this invention, it is possible to add non-extracted powdered edible material to the powdered extract. The addition of a small amount of non-extracted material reduces binding and therefore speeds the rate of dissolution or dispersion of the beverage compositions of this invention. Furthermore, the addition of the non-extracted material can enhance the flavour of the beverage, especially where the added edible material is a strongly flavoured herb, such as mint, fennel, or aniseed.

The powdered extract, optionally together with non-extracted powdered edible material, is then prepared for compression by milling and sieving the powder to provide particles of uniform size to be compressed. Suitably, the mesh size is from 60 to 40 mesh, to give a particle size of 250 to 420 microns. At this stage, the powder is mixed with an edible oil as a binder. No other binders or excipients are added. In particular, no disintegrant excipients are employed. This produces a blended powder, ready for compression.

The compression process to produce the compositions of this invention may be carried out by known methods. Suitable means to compress the powder include a tabletting machine, pelletiser, or an extruder. When using a tabletting machine, the blended powder is filled into the mould of the tabletting machine and a punch is used to compress and eject a tablet. Any conventional tabletting machine may be used, for example a desktop or rotary direct compression tabletting machine.

Instead of including disintegrant excipients, the force for compressing the powdered extract into a tablet is selected to be sufficiently low to allow the tablet to be able to disintegrate readily in hot water or milk. The compression force can vary depending on the edible oil used. Compression forces are conveniently measured in kiloNewtons, abbreviated as kN. Suitable low compression forces are from 1 to 8 kN, for example from 2 to 8 kN, or from 2 to 6 kN, or from 3 to 7 kN, or from 4 to 5 kN, preferably from 1 to 3 kN.

The compression process to produce tablets may also be carried out using a pelletiser or extruder. In these cases, the blended powder is forced through a die, by means of a plunger which operates at a force equivalent to a tabletting machine operating at a low compression, preferably from 1 to 3 kN. Unlike the batch process of a tabletting machine, a pelletiser or extruder operates as a continuous process. After passing through the die of an extruder, the compressed blended powder is cut at regular intervals to produce the tablets. In a pelletiser, a rotating plate similarly cuts the compressed blended powder into individual tablets.

Preferably a pelletiser or extruder is cooled during the continuous compression operation, to ensure that the blended powder does not become overheated.

The compositions of this invention may also be prepared by 3D printing using the compressed blended powder as a substrate in a conventional 3D printing apparatus.

In a further aspect of this invention, the flowability of the blended powder may be controlled by adjusting the particle sizes of the powder. Although there is discussion of particle sizes in EP 0229920, referred to above, there is no suggestion of the use of particle sizes to optimize the flow properties of a blended powder for compression.

The beverage compositions of this invention have sufficient hardness to withstand packaging and storage; and have disintegration properties to be able to dissolve or disperse in hot water or hot milk in a short period of time to produce a beverage drink. The low compression used in preparing the composition create a suitable porosity such that, when the tablet is mixed with hot water or milk and stirred, the air in the porous matrix is released and displaced by hot water or milk, causing the tablet to disintegrate rapidly, suitably in less than two minutes, preferably in less than one minute, to form a solution or dispersion to be consumed.

The compositions of this invention may be made into a beverage by mixing with hot water or hot milk, usually with stirring. Most herbal teas are prepared using hot water, but spicy drinks using hot milk are also known, such as chai; the compositions of this invention can also be conveniently used to prepare such milk-based beverages. In one preparation method, the compositions may be mixed with steamed milk, available in many commercial coffee shops. The mixture of steam and hot milk is advantageous because the steam helps to agitate the mixture and dissolve or disperse the solid beverage composition of this invention more rapidly.

Milk includes dairy and non-dairy milk, such as oat milk, rice milk, soya milk and coconut milk.

An additional advantage of the present compositions is that all of the herbal nutrients are consumed in the beverage. The natural flavour and aroma of the herbal ingredients are retained, producing a drink with improved taste and freshness.

The compositions are sufficiently compact to be packaged in small containers, such as metal boxes, for ease of storage and transport, thus reducing the cost of the product and providing an environmentally friendly product.

Embodiments of the invention is further illustrated by the following specific Examples.

### Example 1.

### Preparation of extract powders

### (a) Ginger extract powder

30kg of ginger is macerated in water, which was purified using reverse osmosis. The extract is then filtered, spray dried, milled and sieved through a 40-mesh size to obtain 1 kg of resulting powder of particle size of approximately 420 microns.

Other extracts are prepared by the same method:
1(b) cinnamon extract powder
1(c) turmeric extract powder
1(d) tulsi extract powder

### Example 2

### Preparation of essential oils

### (a) Cinnamon essential oil

10 kg of mashed cinnamon sticks are introduced into a distillation chamber. Steam is injected through an inlet and allowed to pass through the mashed cinnamon containing the desired oils. The steam releases the aromatic molecules into a vapour. The vaporised compounds are collected using a condenser. Essential oils are siphoned off from the condenser using a separator. A yield of 3-5% of essential oil is expected from this process.

Other essential oils are prepared by the same method:
2(b) Turmeric oil
2(c) Lemon oil (extracted from lemon peels)

### Example 3

### Preparation of oleoresins

### (a) Cinnamon oleoresin

Pressurized liquid carbon dioxide (CO₂) is pumped into a chamber filled with 1 kg of cinnamon powder. The essential oil content then dissolves into the liquid CO₂. After removing any insoluble material, the CO₂ is brought back to natural pressure and evaporates into its gaseous state, leaving an oil and resin mix. A yield of 5-7% of oleoresin is expected from this process.

### Example 4

### Cinnamon and cinnamon oil tablets

95g of water-soluble cinnamon extract powder [Example 1(b)] is tumbled together with 5g of cinnamon extract oil [Example 2(a)], until the mixture is uniform. The resultant powder is loaded on to the hopper of a direct compression tableting machine and compressed at a force of approximately 3 kN.

### Example 5

### Cinnamon and cinnamon oleoresin tablets

94g of water-soluble cinnamon extract powder [Example 1(b)] is tumbled together with 6g of cinnamon oleoresin [Example 3(a)] until the mixture is uniform. The resultant powder is loaded on to the hopper in a direct compression tableting machine and compressed at a force of approximately 3 kN.

### Example 6

### Ginger and turmeric tablets

50g of water-soluble ginger extract powder [Example 1(a)] together with 50g of water-soluble turmeric extract powder [Example 1(c)] are tumbled in a mixer. In this case the ginger extract contains a minimum of 2% gingerols which acts as the binder. The resultant powder is loaded on to the hopper in a direct compression tableting machine and compressed at a force of approximately 2 kN.

### Example 7

### Tulsi and ginger tablets

25g of water soluble tulsi extract powder [Example 1(d)] is tumbled with 75g of water-soluble ginger extract powder [Example 1(a)]. In this case the ginger extract contains a minimum of 2% gingerols which acts as the binder. The resultant powder is loaded on to the hopper in a direct compression tableting machine and compressed at a force of approximately 3 kN.

### Example 8

### Ginger and lemon tablets

95g of water-soluble ginger extract powder [Example 1(a)] is tumbled along with 5g of lemon oil [Example 2(c)], until the mixture is uniform. The resultant powder is loaded on to the hopper in a direct compression tableting machine and compressed at a force approximately 3 kN.

## Claims

1. A solid beverage tablet composition which is readily soluble or dispersible in hot water or milk to produce a beverage, the solid beverage tablet composition comprising a low compression powdered extract of an edible material, wherein the sole binder in the composition is an edible oil.

2. A beverage tablet composition as claimed in claim 1, wherein the beverage is a herbal tea.

3. A beverage tablet composition as claimed in claim 2 wherein the herbal tea comprises cinnamon, fennel, ginger, lemon, mint, turmeric, or tulsi, or mixtures thereof.

4. A beverage tablet composition as claimed in any one of claims 1 to 3, wherein the edible oil is an edible herbal oil.

5. A beverage tablet composition as claimed in any one of claims 1 to 3, wherein the edible oil is ginger oil, cinnamon oil, coconut oil, lemon oil, turmeric, vitamin D oil or omega 3 oil.

6. A beverage tablet composition as claimed in any one of claims 1 to 5, wherein the edible oil used as a binder in the composition is derived from the same plant as the beverage ingredient.

7. A beverage tablet composition as claimed in any one of claims 1 to 6, which further comprises non-extracted powdered edible material.

8. A process for the preparation of a solid beverage tablet composition as claimed in claim 1, which process comprises extracting an edible material into a food grade solvent, removing insoluble residues, drying the solution to produce a powdered extract of the edible material, and compressing the powdered extract under low compression in the presence of an edible oil, under conditions to produce a solid tablet composition that is readily soluble or dispersible in hot water or milk to produce a beverage.

9. A process as claimed in claim 8, wherein the compression force is from 1 to 3 kN.

10. A process as claimed in claim 8 or claim 9, wherein the food grade solvent is water.

11. A process as claimed in claim 10, wherein the solution is dried by freeze drying or spray drying.

12. A process as claimed in any one of claims 8 to 11, wherein the flowability of the powdered extract is controlled by adjusting the particle sizes of the powdered extract.

## Patentansprüche

1. Feste Getränketablettenzusammensetzung, welche in heißem Wasser oder Milch leicht löslich oder dispergierbar ist, um ein Getränk zu erzeugen, wobei die feste Getränketablettenzusammensetzung ein niedrigverdichtetes Pulverextrakt eines essbaren Materials umfasst, wobei das einzige Bindemittel in der Zusammensetzung ein essbares Öl ist.

2. Getränketablettenzusammensetzung nach Anspruch 1, wobei das Getränk ein Kräutertee ist.

3. Getränketablettenzusammensetzung nach Anspruch 2, wobei der Kräutertee Zimt, Fenchel, Ingwer, Zitrone, Minze, Kurkuma oder Tulsi oder Gemische davon umfasst.

4. Getränketablettenzusammensetzung nach einem der Ansprüche 1 bis 3, wobei das essbare Öl ein essbares Kräuteröl ist.

5. Getränketablettenzusammensetzung nach einem der Ansprüche 1 bis 3, wobei das essbare Öl Ingweröl, Zimtöl, Kokosöl, Zitronenöl, Kurkuma, Vitamin-D-Öl oder Omega-3-Öl ist.

6. Getränketablettenzusammensetzung nach einem der Ansprüche 1 bis 5, wobei das in der Zusammensetzung als Bindemittel verwendete essbare Öl aus derselben Pflanze gewonnen wird wie die Getränkeingredienz.

7. Getränketablettenzusammensetzung nach einem der Ansprüche 1 bis 6, welche weiter nicht extrahiertes pulvriges essbares Material umfasst.

8. Prozess zur Herstellung einer festen Getränketablettenzusammensetzung nach Anspruch 1, wobei der Prozess Extrahieren eines essbaren Materials in ein lebensmittelechtes Lösungsmittel, Entfernen nicht löslicher Rückstände, Trocknen der Lösung, um ein Pulverextrakt des essbaren Materials zu erzeugen, und Komprimieren des Pulverextrakts unter niedriger Verdichtung gemeinsam mit einem essbaren Öl unter Bedingungen zur Erzeugung einer festen Tablettenzusammensetzung umfasst, welche in heißem Wasser oder Milch leicht löslich oder dispergierbar ist, um ein Getränk zu erzeugen.

9. Prozess nach Anspruch 8, wobei die Kompressionskraft von 1 bis 3 kN beträgt.

10. Prozess nach Anspruch 8 oder Anspruch 9, wobei das lebensmittelechte Lösungsmittel Wasser ist.

11. Prozess nach Anspruch 10, wobei die Lösung durch Gefriertrocknung oder Sprühtrocknung getrocknet wird.

12. Prozess nach einem der Ansprüche 8 bis 11, wobei das Fließvermögen des Pulverextrakts durch Anpassen der Partikelgrößen des Pulverextrakts gesteuert wird.

## Revendications

1. Composition de comprimé solide de boisson qui est facilement soluble ou dispersable dans de l'eau ou du lait chaud pour produire une boisson, la composition de comprimé solide de boisson comprenant un extrait en poudre à faible compression d'une matière comestible, dans laquelle le seul liant de la composition est une huile comestible.

2. Composition de comprimé de boisson selon la revendication 1, dans laquelle la boisson est une tisane.

3. Composition de comprimé de boisson selon la revendication 2, dans laquelle la tisane comprend de la cannelle, du fenouil, du gingembre, du citron, de la menthe, du curcuma ou du tulsi, ou des mélanges de ceux-ci .

4. Composition de comprimé de boisson selon l'une quelconque des revendications 1 à 3, dans laquelle l'huile comestible est une huile végétale comestible.

5. Composition de comprimé de boisson selon l'une quelconque des revendications 1 à 3, dans laquelle l'huile comestible est de l'huile de gingembre, de l'huile de cannelle, de l'huile de noix de coco, de l'huile de citron, du curcuma, de l'huile de vitamine D ou de l'huile d'oméga 3.

6. Composition de comprimé de boisson selon l'une quelconque des revendications 1 à 5, dans laquelle l'huile comestible utilisée en tant que liant dans la composition est dérivée de la même plante que l'ingrédient de la boisson.

7. Composition de comprimé de boisson selon l'une quelconque des revendications 1 à 6, qui comprend en outre une matière comestible en poudre non extraite.

8. Processus pour la préparation d'une composition de comprimé solide de boisson selon la revendication 1, lequel processus comprend l'extraction d'une matière comestible dans un solvant de qualité alimentaire, l'élimination de résidus insolubles, le séchage de la solution pour produire un extrait en poudre de la matière comestible, et la compression de l'extrait en poudre sous faible compression en présence d'une huile comestible, dans des conditions permettant de produire une composition de comprimé solide qui est facilement soluble ou dispersable dans de l'eau ou du lait chaud pour produire une boisson.

9. Processus selon la revendication 8, dans lequel la force de compression est de 1 à 3 kN.

10. Processus selon la revendication 8 ou la revendication 9, dans lequel le solvant de qualité alimentaire est l'eau.

11. Processus selon la revendication 10, dans lequel la solution est séchée par lyophilisation ou séchage par pulvérisation.

12. Processus selon l'une quelconque des revendications 8 à 11, dans lequel la fluidité de l'extrait en poudre est régulée en ajustant les tailles de particules de l'extrait en poudre.
